(19) Europäisches Patentamt
European Patent Office
Office européen des brevets

(11) **EP 3 587 068 A1**

(12) **EUROPEAN PATENT APPLICATION**
published in accordance with Art. 153(4) EPC

(43) Date of publication:
**01.01.2020 Bulletin 2020/01**

(21) Application number: **18756671.6**

(22) Date of filing: **20.02.2018**

(51) Int Cl.:
**B29C 47/06** (2006.01)   **B29C 47/88** (2006.01)
**B32B 27/36** (2006.01)   **B65D 65/40** (2006.01)
**B29K 69/00** (2006.01)   **B29L 9/00** (2006.01)

(86) International application number:
**PCT/JP2018/006050**

(87) International publication number:
**WO 2018/155448 (30.08.2018 Gazette 2018/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **27.02.2017   JP 2017034875**

(71) Applicant: **Mitsui Chemicals, Inc.
Minato-ku
Tokyo 105-7122 (JP)**

(72) Inventors:
- **YAMASAKI, Takashi**
  **Chiba 299-0108 (JP)**
- **SHIGA, Ryohei**
  **Chiba 299-0108 (JP)**
- **OGAWA, Yoshiyuki**
  **Chiba 299-0108 (JP)**

(74) Representative: **Hoffmann Eitle
Patent- und Rechtsanwälte PartmbB
Arabellastraße 30
81925 München (DE)**

(54) **METHOD FOR PRODUCING LAMINATE AND CO-EXTRUDED SHEET**

(57)   The present invention provides a method for manufacturing a laminate, comprising the step of co-extruding a polycarbonate and an adhesive composition to thereby form a polycarbonate layer (A) and an adhesive layer (B) at least a part of which is laminated to the layer (A); and the step of heat-treating the polycarbonate layer (A) and the adhesive layer (B), wherein the adhesive composition satisfies the following requirements (i) to (iii): (i) comprising a polyolefin formed through a reaction between a polyolefin (a) having a group reactive with a carbodiimide group and a carbodiimide group-containing compound (b); (ii) comprising carbodiimide groups in an amount of 0.1 to 50 mmol per 100 g of adhesive composition; and (iii) having a density of 0.870 g/cm$^3$ to 0.940 g/cm$^3$.

EP 3 587 068 A1

**Description**

Technical Field

The present invention relates to a novel method for manufacturing a laminate and a novel co-extruded sheet.
In more detail, the present invention relates a method for manufacturing a laminate that has a laminate structure comprising a polycarbonate layer and an adhesive layer formed of an adhesive composition and also preferably a layer formed of a resin other than the polycarbonate, such as a polyolefin.

Background Art

Polycarbonates are characterized in, for example, that they are excellent in transparency, gloss, heat resistance, and impact resistance and also can be mass-produced readily, and therefore, polycarbonates are used for various applications in many fields. Moreover, a polycarbonate can be multilayered with another material to combine advantageous properties of the other material with properties of the polycarbonate. For example, a polycarbonate is laminated to a polyolefin, which has better heat-sealability than polycarbonates, to provide a laminate having both gross due to the polycarbonate and heat-sealability, which is used as a package characterized by gross of the polycarbonate. Also, a polycarbonate is laminated to a resin having better gas impermeability than polycarbonates, such as a saponified product of an ethylene/vinyl acetate copolymer, to provide a laminate having both the properties of the polycarbonate and higher gas impermeability, which is used as a packaging material for which high gas impermeability is required, for example, a packaging material for foods etc.
For example, Patent Literature 1 discloses a laminate including a layer of an adhesive obtained by reacting a polyolefin (A) having a group reactive with a carbodiimide group, and a carbodiimide group-containing compound (B) in the presence of an unmodified polyolefin (C). Patent Literature 2 discloses a laminate obtained by co-extruding a polyolefin modified with maleic anhydride and a polycarbonate. Patent Literature 3 discloses a laminate including a polycarbonate layer, a styrene-based binder layer, and a polypropylene layer. Patent Literature 4 discloses a laminate including a polycarbonate layer and an ethylene/vinyl alcohol copolymer layer.
However, in any of these laminates, the adhesive strength of the polycarbonate is not necessarily large, and therefore the polycarbonate layer tends to delaminate while use, which is problematic.

Citation List

Patent Literature

Patent Literature 1: Japanese Patent No. 4699449
Patent Literature 2: Japanese Patent No. 3930515
Patent Literature 3: National Publication of International
Patent Application No. 2007-507374
Patent Literature 4: Japanese Patent Publication No. 07-103278

Summary of Invention

Technical Problem

The present inventors have considered using a graft modified ethylene/$\alpha$-olefin random copolymer for an adhesive for the purpose of improving the adhesive strength to polycarbonates when studying methods for manufacturing a laminate including a polycarbonate layer. As a result, it has been found that the adhesiveness between the polycarbonate layer and the graft modified ethylene/$\alpha$-olefin random copolymer layer is relatively good when adhesion is achieved by pressing but is not necessarily sufficient when adhesion is achieved by extrusion, which is suitable for continuous production of a sheet. It has been found that adhesiveness particularly at a high temperature is problematic, and that adhesive strength may be decreased by heating in an optical component used in an atmosphere at a high temperature in an automobile, for example, or in a packaging material that undergoes packing a content at a high temperature or a heat treatment such as retort treatment, which results in the problem of delamination of the laminated layers. The present inventors have also considered using a polypropylene graft-modified with maleic anhydride, which is an adhesive resin having high heat resistance, but achieving adhesion to polycarbonate is difficult by the polypropylene.
An object of the present invention is to provide a method for manufacturing a laminate that involves adhering a polycarbonate layer and a layer formed of a resin other than the polycarbonate, such as a polyolefin, to thereby readily manufacture a laminate that has good adhesiveness and does not decrease in the adhesive strength particularly even undergoing a severe treatment in an atmosphere at a high temperature or such as retort treatment.

Solution to Problem

The method for manufacturing a laminate of the present invention comprises the step of co-extruding a polycarbonate and an adhesive composition to thereby form a polycarbonate layer (A) and an adhesive layer (B) at least a part of which is laminated to the layer (A); and the step of heat-treating the polycarbonate layer (A) and the adhesive layer (B), wherein the adhesive composition satisfies the following requirements (i) to (iii):
(i) comprising a polyolefin formed through a reaction between a polyolefin (a) having a group reactive with a carbodiimide group and a carbodiimide group-containing compound (b);
(ii) comprising carbodiimide groups in an amount of 0.1 to 50 mmol per 100 g of adhesive composition; and
(iii) having a density of 0.870 g/cm$^3$ to 0.940 g/cm$^3$.

The co-extruding step is preferably a step of co-extruding the polycarbonate and the adhesive composition with a resin other than the polycarbonate or a resin contained in the adhesive composition to thereby form the polycarbonate layer (A), the adhesive layer (B), and a layer (C) formed of the resin other than the polycarbonate or the resin contained in the adhesive composition, wherein the layer (C) is laminated to the adhesive layer (B); and the heat-treating step is preferably a step of heat-treating the polycarbonate layer (A), the adhesive layer (B), and the layer (C).
The resin other than the polycarbonate or the resin contained in the adhesive composition preferably comprises a polyolefin.
The polycarbonate is preferably a polycarbonate or a copolycarbonate obtained by reacting a dihydroxy compound and phosgene or diphenyl carbonate.
The dihydroxy compound is more preferably 4,4'-dihydroxy-diphenyl-2,2-propane (bisphenol A).
The method for manufacturing a laminate can be used for a packaging container for foods.
At least one of the co-extruding step and the heat-treating step is preferably performed at 260°C or more.
The co-extruding step is preferably performed at 260°C or more, and also the heat-treating step is preferably performed at 60°C or more.
The heat-treating step is preferably performed by heating for 4 minutes or more in water at 60°C or more.
The co-extruded sheet of the present invention comprises a laminate as a part thereof, the laminate comprising a polycarbonate layer (A) formed of a polycarbonate and an adhesive layer (B) at least a part of which is laminated to the layer (A), wherein the adhesive layer (B) is formed of an adhesive composition satisfying the following requirements (i) to (iii):
(i) comprising a polyolefin formed through a reaction between a polyolefin (a) having a group reactive with a carbodiimide group and a carbodiimide group-containing compound (b);
(ii) comprising carbodiimide groups in an amount of 0.1 to 50 mmol per 100 g of adhesive composition; and
(iii) having a density of 0.870 g/cm$^3$ to 0.940 g/cm$^3$.

Advantageous Effects of Invention

According to the present invention, a specific adhesive composition including a carbodiimide group-containing polyolefin obtained by reacting a polyolefin (a) having a group reactive with a carbodiimide group with a carbodiimide group-containing compound (b) is used for an adhesive layer (B) between a polycarbonate layer (A) and a layer (C) formed of another resin, such as a polyolefin, to adhere the polycarbonate layer (A) and the layer (C) to each other strongly, and thus, a laminate can be readily manufactured that does not decrease in the adhesive strength even undergoing a severe treatment in an atmosphere at a high temperature or such as retort treatment.

Description of Embodiments

The present invention will be described below in more detail.
The method for manufacturing a laminate of the present invention comprises: the step of co-extruding a polycarbonate and an adhesive composition satisfying the above described requirements (i) to (iii) to thereby form a polycarbonate layer (A) and an adhesive layer (B) at least a part of which is laminated to the polycarbonate layer (A); and the step of heat-treating the polycarbonate layer (A) and the adhesive layer (B).

[Co-extruding step]

In the co-extruding step, a polycarbonate and an adhesive composition are co-extruded to form a polycarbonate layer (A) and an adhesive layer (B) at least a part of which is laminated to the layer (A). For example, the co-extruding step can be performed as follows: the polycarbonate and the adhesive composition are separately melted in respective extruders, and then fed to a die having a two-layered structure to extrude so that the polycarbonate and the adhesive composition are at least partially laminated to each other. The polycarbonate layer (A) and the adhesive layer (B) are formed such that at least a part of the polycarbonate layer (A) and at least a part of the adhesive layer (B) are laminated to each other. The whole of one of these layers may be laminated to a part of the whole of the other layer.

In the co-extruding step, the polycarbonate and the adhesive composition may be co-extruded with a resin other than the polycarbonate or the resin contained in the adhesive composition (hereinafter referred to as "other resin") to thereby form the polycarbonate layer (A), the adhesive layer (B), and a layer (C) formed of the other resin and laminated to the adhesive layer (B). In this case, a three-layered structure of the layer (A)/ the layer (B)/ the layer (C) is obtained. In this case, the polycarbonate, the adhesive composition, and the other resin can be separately melted in respective extruders, and then fed to a die having a three-layered structure to co-extrude so that the adhesive composition is to be an intermediate layer, thereby manufacturing a laminate.

The co-extrusion method includes a T-die method using a flat die and an inflation method using a circular die, but any of these methods can be adopted. As the flat die, a single manifold or multi-manifold type using a black box may be used. Further, with respect to the die for use in the inflation method, any of known dies can be used.

The molding temperature in the co-extruding step is not particularly limited as long as it is a temperature at which the adhesive composition and the polycarbonate can be adhered to each other. In view of adhesiveness between the adhesive composition and the polycarbonate and the physical properties of the laminate as a whole, the molding temperature for the adhesive composition is usually 260°C or more, preferably a temperature higher than 260°C, more preferably 280°C or more, and the molding temperature for the polycarbonate is usually 320°C or less, preferably 310°C or less, though the molding temperature for the polycarbonate is appropriately set to a temperature equal to or higher than the melting point thereof, taking flowability thereof and various molding conditions into consideration. The upper limit of the molding temperature of the adhesive composition is not particularly limited, and is 350°C, for example.

[Polycarbonate layer (A) formed of polycarbonate]

The polycarbonate layer (A) includes a polycarbonate. The polycarbonate is any of various polycarbonates and copolycarbonates obtained by reacting a dihydroxy compound and phosgene or diphenyl carbonate according to a known method. Examples of the dihydroxy compound include hydroquinone, resorcinol, 4,4'-dihydroxy-diphenyl-methane, 4,4'-dihydroxy-diphenyl-ethane, 4,4'-dihydroxy-diphenyl-n-butane, 4,4'-dihydroxy-diphenyl-heptane, 4,4'-dihydroxy-diphenyl-phenyl-methane, 4,4'-dihydroxy-diphenyl-2,2-propane (bisphenol A), 4,4'-dihydroxy-3,3'-dimethyl-diphenyl-2,2-propane, 4,4'-dihydroxy-3,3'-diphenyl-diphenyl-2,2-propane, 4,4'-dihydroxy-dichloro-diphenyl-2,2-propane, 4,4'-dihydroxy-diphenyl-1,1-cyclopentane, 4,4'-dihydroxy-diphenyl-1,1-cyclohexane, 4,4'-dihydroxy-diphenyl-methyl-phenyl-methane, 4,4'-dihydroxy-diphenyl-ethyl-phenyl-methane, 4,4'-dihydroxy-diphenyl-2,2,2-trichloro-1,1-ethane, 2,2'-dihydroxydiphenyl, 2,6-dihydroxynaphthalene, 4,4'-dihydroxydiphenyl ether, 4,4'-dihydroxy-3,3'-dichlorodiphenyl ether, and 4,4'-dihydroxy-2,5-diethoxyphenyl ether. A polycarbonate obtained by using 4,4'-dihydroxy-diphenyl-2,2-propane (bisphenol A) among these is preferable because it has the excellent mechanical properties and transparency.

[Adhesive layer (B) formed of adhesive composition]

The adhesive layer (B) includes an adhesive composition satisfying the following requirements (i) to (iii).

(i) The adhesive composition comprises a polyolefin formed through a reaction between a polyolefin (a) having a group reactive with a carbodiimide group and a carbodiimide group-containing compound (b).

In other words, the adhesive composition comprises a carbodiimide group-containing polyolefin. Preferably, both the polyolefin (a) and the carbodiimide group-containing compound (b) are solid.

(Polyolefin (a))

The polyolefin (a) can be obtained by introducing a compound (m) having a group reactive with a carbodiimide group into a polyolefin. The polyolefin (a) may be a single polyolefin or include two or more polyolefins.

The compound (m) having a group reactive with a carbodiimide group may be a compound having a group having an active hydrogen having reactivity with a carbodiimide group. Specifically, examples thereof include compounds having a group derived from a carboxylic acid, an amine, an alcohol, a thiol, or the like. Among these, a compound having a group derived from a carboxylic acid is preferably used, and especially an unsaturated carboxylic acid and/or a derivative thereof are particularly preferable. A compound that is not a compound having a group having reactive hydrogen but has a group that is readily converted by water or the like to a group having active hydrogen is also preferably used. Specific examples thereof include a compound having an epoxy group or a glycidyl group.

The compound (m) having a group reactive with a carbodiimide group may be a single compound or include two or more compounds.

The unsaturated carboxylic acid and/or the derivative thereof that can be used as the compound (m) having a group reactive with a carbodiimide group may be an unsaturated compound having one or more carboxylic acid groups, and is preferably an unsaturated compound having one or more carboxylic acid anhydride group and a derivative thereof. Examples of the unsaturated group include a vinyl group, a vinylene group, and an unsaturated cyclic hydrocarbon group. Specific examples of such a compound include: unsaturated carboxylic acids such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1] hept-2-ene-5,6-dicarboxylic acid; acid anhydrides thereof; and derivatives thereof (for example, acid halides, amides, imides, and esters). Specific examples of the compound include: malenyl chloride, malenylimide, maleic anhydride, itaconic anhydride, citraconic anhydride, tetrahydrophthalic anhydride, bicyclo[2,2,1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, aminoethyl methacrylate, and aminopropyl methacrylate.

When the unsaturated carboxylic acid and/or the derivative thereof are used as the compound (m) having a group reactive with a carbodiimide group, they can be used singly or in combinations of two or more thereof. Among these, maleic anhydride, (meth)acrylic acid, itaconic anhydride, citraconic anhydride, tetrahydrophthalic anhydride, bicyclo[2,2,1]hept-2-ene-5,6-dicarboxylic anhydride, hydroxyethyl (meth)acrylate, glycidyl methacrylate, and aminopropyl methacrylate are preferable. Further, dicarboxylic anhydrides such as maleic anhydride, itaconic anhydride, citraconic anhydride, tetrahydrophthalic anhydride, and bicyclo[2,2,1]hept-2-ene-5,6-dicarboxylic anhydride are particularly preferable.

As the method of introducing the compound (m) having a group reactive with a carbodiimide group into a polyolefin, any well-known method can be adopted. Examples thereof include a method involving graft-copolymerization of the compound (m) having a group reactive with a carbodiimide group onto the polyolefin main chain, and a method involving radical copolymerization of an olefin and the compound (m) having a group reactive with a carbodiimide group.

The graft copolymerization and the radical copolymerization will be separately described below specifically.

<Graft copolymerization>

The polyolefin (a) having a group reactive with a carbodiimide group can be obtained by graft-copolymerizing the compound (m) having a group reactive with a carbodiimide group onto the polyolefin main chain.

(Polyolefin main chain)

The polyolefin used as the polyolefin main chain is a polymer including an aliphatic $\alpha$-olefin having 2 to 20 carbon atoms, a cyclic olefin, or a nonconjugated diene as a main component, and preferably an aliphatic $\alpha$-olefin having 2 to 10 carbon atoms, more preferably an aliphatic $\alpha$-olefin having 2 to 8 carbon atoms, as a main component. These olefins may be used singly or in combinations of two or more thereof. When the polyolefin is a copolymer, the content of the olefin as a comonomer is not particularly limited as long as the effects of the present invention are provided, and is usually 50 mol% or less, preferably 40 mol% or less, more preferably 30 mol% or less. Among the polyolefins falling within such a scope, crystalline polyolefins, such as polyethylene, polypropylene, polybutene-1, poly-4-methylpentene-1, and $\alpha$-olefin copolymers thereof, are preferable, and polyethylene, polypropylene, and a propylene/ethylene copolymer are more preferable. Both the polyolefins having an isotactic structure and the polyolefins having a syndiotactic structure can be used, and the stereoregularity thereof is not particularly limited.

The density (as measured according to JIS K7112) of the polyolefin used for the graft modification is not particularly limited as long as the effects of the present invention are provided, and it is usually 0.8 to 1.10 g/cm$^3$, preferably 0.8 to 1.05 g/cm$^3$, more preferably 0.8 to 1.00 g/cm$^3$. The melt flow rate (MRF) of the polyolefin at 230°C under a load of 2.16 kg according to ASTM D1238 is not particularly limited as long as the effects of the present invention are provided, and it is usually 0.01 to 500 g/10 min, preferably 0.05 to 200 g/10 min, more preferably 0.1 to 100 g/10 min. When the density and MFR are within the respective ranges described above, a graft modified copolymer to be obtained also has a density and MFR at the almost same levels, and is therefore easy to handle.

The degree of crystallinity of the polyolefin used for the graft modification is not particularly limited as long as the effects of the present invention are provided, and it is usually 2% or more, preferably 5% or more, more preferably 10% or more. When the degree of crystallinity is within the above range, the graft modified copolymer to be obtained is excellent in handling.

The number average molecular weight (Mn) of the polyolefin used for the graft modification as measured by gel permeation chromatography (GPC) is preferably 5000 to 500000, more preferably 10000 to 100000. When the number average molecular weight (Mn) is within the above range, the polyolefin is excellent in handling. For an ethylene-based polyolefin, the number average molecular weight thereof can be determined in terms of polyethylene when the amount of the comonomer is 10 mol% or less, or in terms of ethylene/propylene (based on an ethylene content of 70 mol%) when the amount of the comonomer is 10 mol% or more.

The polyolefin described above can be manufactured by any of conventionally known methods, and can be obtained by polymerization using, for example, a titanium-based catalyst, a vanadium-based catalyst, or a metallocene-based catalyst. The polyolefin used for the graft modification may be in either form of a resin or an elastomer. Both the polyolefin having an isotactic structure and the polyolefin having syndiotactic structure can be used, and the stereoregularity thereof is also not particularly limited. Commercially available resins can also be utilized as they are.

(Method for graft polymerization)

When the polyolefin (a) having a group reactive with a carbodiimide group is obtained by graft copolymerization, the compound (m) having a group reactive with a carbodiimide group and optionally another ethylenically unsaturated monomer, if needed, are graft-copolymerized onto a polyolefin as the graft main chain in the presence of a radical initiator.

The method for grafting the compound (m) having a group reactive with a carbodiimide group onto the polyolefin main chain is not particularly limited, and any of conventionally known methods for graft polymerization, such as a solution method and a melt-kneading method, can be adopted.

The amount grafted of the compound (m) having a group reactive with a carbodiimide group is usually 0.05 to 20% by weight, preferably 0.05 to 10% by weight, more preferably 0.05 to 5% by weight, still more preferably 0.05 to 3% by weight, relative to 100% by weight of the polyolefin (a). The amount of the compound (m) grafted is a net amount grafted that is determined after the free compound (m) is removed from the polyolefin (a). The amount grafted can be determined by any of known methods such as $^{13}$C-NMR or $^1$H-NMR analysis. When a monomer having an acid functional group, such as an unsaturated carboxylic acid or an anhydride thereof, is used as the compound (m), the acid value can be used as an index of the amount of the functional group introduced into the polyolefin (a), for example. Also, when maleic anhydride is used, the amount grafted can be determined using an infrared spectrophotometer on the basis of the absorption spectrum of the carbonyl group of maleic anhydride, which is usually detected at around 1780 to 1790 cm$^{-1}$.

<Radical copolymerization>

The polyolefin (a) having a group reactive with a carbodiimide group can also be obtained by radically copolymerizing an olefin and the compound (m) having a group reactive with a carbodiimide group. As the olefin, any of olefins for forming the polyolefin as the graft main chain described above can be adopted, and the compound (m) having a group reactive with a carbodiimide group is also as described hereinbefore.

The method for copolymerizing the olefin and the compound (m) having a group reactive with a carbodiimide group is not particularly limited, and any of conventionally known method for radical copolymerization can be adopted.

In the polyolefin (a) having a group reactive with a carbodiimide group, the content of the residue from the compound (m) having a group reactive with a carbodiimide group is usually 0.1 to 10% by weight, preferably 0.1 to 8.0% by weight, more preferably 0.1 to 6.0% by weight. When the content of the residue from the compound (m) having a group reactive with a carbodiimide group is within the above described range, the polyolefin (a) can favorably crosslink with the carbodiimide group-containing compound (b) to produce the adhesive composition, which is preferable. When the content falls below the above described range, the adhesive strength may be insufficient.

The density (as measured according to JIS K7112) of the polyolefin (a) having a group reactive with a carbodiimide group is usually 0.870 to 0.940 g/cm$^3$, preferably 0.875 to 0.940 g/cm$^3$, more preferably 0.880 to 0.940 g/cm$^3$.

(Carbodiimide group-containing compound (b))

The carbodiimide group-containing compound (b) is a polycarbodiimide having a repeating unit represented by general formula (1) below. As the carbodiimide group-containing compound (b), such polycarbodiimides may be used singly or in combinations of two or more.

$$-N=C=N-R_1 \ldots \qquad (1)$$

wherein $R_1$ represents a divalent organic group having 2 to 40 carbon atoms.

The polycarbodiimide can be manufactured by subjecting an organic diisocyanate, such as an aliphatic diisocyanate, an aromatic diisocyanate, or an alicyclic diisocyanate, to a decarboxylation condensation reaction without a solvent or in an inert solvent in the presence of a condensation catalyst. For example, diisocyanates, such as hexamethylene diisocyanate, 4,4-diphenylmethane diisocyanate, 1,4-phenylene diisocyanate, 2,4-tolylene diisocyanate, xylylene diisocyanate, cyclohexane-1,4-diisocyanate, dicyclohexylmethane-4,4'-diisocyanate, and isophorone diisocyanate, are used singly or in combinations of two or more thereof. In the decarboxylation condensation reaction, the degree of polymerization of the polycarbodiimide can be regulated by selecting the catalyst, the reaction temperature, and the terminal-blocking agent, and other conditions. A polycarbodiimide having a degree of polymerization of usually 2 to 40, preferably 4 to 20 is used. Examples of the terminal-blocking agent that can be used include monoisocyanates such as phenyl isocyanate, tolyl isocyanate, and naphthyl isocyanate, and active hydrogencontaining compounds such as methanol, ethanol, diethylamine, cyclohexylamine, succinic acid, benzoic acid, and ethyl mercaptan. Examples of the condensation catalyst that can be used include an alcoholate of titanium, hafnium, zirconium, sodium, calcium, or the like, and an organophosphorus compound such as phospholene oxide.

The number average molecular weight (Mn) of the carbodiimide group-containing compound (b) in terms of polystyrene as determined by gel permeation chromatography (GPC) is not particularly limited as long as the effects of the present invention are provided, and it is usually 400 to 500000, preferably 700 to 10000, more preferably 1000 to 8000. When the number average molecular weight (Mn) is within the above range, the adhesive composition to be obtained has excellent adhesive strength, which is preferable.

The carbodiimide group-containing compound (b) may be a polycarbodiimide accompanied by a monocarbodiimide, and a single compound or a plurality of compounds mixed can be used as the compound (b).

As the carbodiimide group-containing compound (b), a commercially available carbodiimide group-containing compound can be used as it is. Examples of the commercially available carbodiimide group-containing compound include CARBODILITE (R) HMV-8CA and HMV-15CA, and CARBODILITE (R) LA1, all manufactured by Nisshinbo Chemical Inc.

As the number of carbodiimide groups in a single molecule of the carbodiimide compound is larger, the number of the reactive sites in a single molecule of an adhesive to a polar resin is larger, and therefore more strong adhesion to the polar resin can be provided. Thus, the number of carbodiimide groups in a single molecule of the carbodiimide group-containing compound (b) is preferably 10 or more. The upper limit of the number of carbodiimide groups in a single molecule of the carbodiimide group-containing compound (b) is not particularly limited as long as the effects of the present invention are provided; however, it is usually 30 in view of the cost because a larger number of carbodiimide groups in a single molecule needs an increase in the amount of the carbodiimide compound added, which leads to a larger material cost.

The content of the carbodiimide group in the carbodiimide group-containing compound (b) can be determined by, for example, $^{13}$C-NMR, IR, or a titration method, and can be grasped in terms of a carbodiimide group equivalent. A peak assigned thereto can be observed at 130 to 142 ppm in $^{13}$C-NMR and at 2130 to 2140 cm$^{-1}$ in IR.

The $^{13}$C-NMR analysis can be performed, for example, in the following manner. Specifically, 0.35 g of a sample is dissolved in 2.0 ml of hexachlorobutadiene by heating. The resulting solution is filtered with a glass filter (G2), and 0.5 ml of deuterated benzene is added to the filtrate. The resulting mixture is put in an NMR tube having an inner diameter of 10 mm, and then subjected to $^{13}$C-NMR analysis at 120°C using an NMR spectrometer GX-500 manufactured by JEOL Ltd. The number of scans is 10000 or more.

(Reaction between polyolefin (a) having group reactive with carbodiimide group and carbodiimide group-containing compound (b))

The polyolefin having a carbodiimide group included in the adhesive composition can be obtained by reacting the polyolefin (a) having a group reactive with a carbodiimide group and the carbodiimide group-containing compound (b) at a temperature preferably of 230°C or more. Specifically, the adhesive composition can be obtained by melt-kneading, such as melt-modifying, but the specific method is not limited thereto.

Melt-kneading is illustrated below. The method for reacting the polyolefin (a) having a group reactive with a carbodiimide group and the carbodiimide group-containing compound (b) at a temperature preferably of 230°C or more is not particularly limited, and the polyolefin (a) having a group reactive with a carbodiimide group and the carbodiimide group-containing compound (b) can be put into a Henschel mixer, a V-type blender, a tumbler blender, a ribbon blender, or the like, kneaded therein, and then melt-kneaded using a single-screw extruder, a multi-screw extruder, a kneader, a Banbury mixer, or the like, to thereby obtain the polyolefin having a carbodiimide group. Among these, an apparatus excellent in kneading performance, such as a multi-screw extruder, a kneader, or a Banbury mixer, is preferably used because it can provide an adhesive composition containing components more uniformly dispersed therein and reacted.

For feeding the polyolefin (a) having a group reactive with a carbodiimide group and the carbodiimide group-containing compound (b), they can be mixed in advance with each other and then fed from a hopper. Alternatively, part of components can be fed from a hopper while the other components are fed from a feeding port provided at arbitrary location between the vicinity of the hopper and the head of the extruder. Either method can be adopted.

The temperature when melt-kneading the above components may be a temperature equal to or higher than the highest melting point among the melting points of the components to be mixed, and specifically, melt-kneading is usually performed at 180 to 320°C, preferably 230 to 300°C, more preferably 235 to 280°C.

The rate of the reaction between the polyolefin (a) and the carbodiimide group-containing compound (b) can be evaluated according to the following method.

A hot-pressed sheet of the polyolefin (a) having a group reactive with a carbodiimide group (as the reference) and that of the adhesive composition including the polyolefin having a carbodiimide group are prepared, and then the resulting sheets are subjected to infrared absorption analysis using an infrared absorption analyzer. In the charts obtained, the absorbance due to the group reactive with a carbodiimide group in the polyolefin (a) is compared to the difference between the absorbance due to the group reactive with a carbodiimide group in the polyolefin (a) and the absorbance due to the group reactive with a carbodiimide group in the adhesive composition, and specifically, the reaction rate can be calculated from the equation (2) below. When maleic anhydride is used for the group reactive with a carbodiimide group, the absorbance at around 1790 cm$^{-1}$ can be used.

$$\text{Reaction rate (\%)} = [X/Y] \times 100 \ldots(2)$$

wherein X represents the difference between the absorbance due to the group reactive with a carbodiimide group in the polyolefin (a) and the absorbance due to the group reactive with a carbodiimide group in the adhesive composition, and

Y represents the absorbance due to the group reactive with a carbodiimide group in the polyolefin (a).

The reaction rate determined according to the above method for the adhesive composition is usually within the range of 40 to 100%, preferably 60 to 100%, more preferably 80 to 100%.

The adhesive composition satisfies the requirement (ii): comprising carbodiimide groups in an amount of 0.1 to 50 mmol per 100 g of adhesive composition.

The adhesive composition includes the polyolefin having a carbodiimide group, and the amount of the carbodiimide group therein is 0.1 to 50 mmol, preferably 0.2 to 40 mmol, more preferably 0.5 to 30 mmol, per 100 g of adhesive composition. When the amount of the carbodiimide group in the adhesive composition is within the above range, the adhesive composition has excellent adhesiveness and also crosslink of the polyolefin (a) can be prevented, which are preferable.

The content of the carbodiimide group in the adhesive composition can be determined by, for example, $^{13}$C-NMR, IR, or a titration method, and can be grasped in terms of the carbodiimide group equivalent. A peak assigned thereto can be observed at 130 to 142 ppm in $^{13}$C-NMR and at 2130 to 2140 cm$^{-1}$ in IR. The $^{13}$C-NMR analysis can be performed according to, for example, the analysis method described above for the content of the carbodiimide group in the carbodiimide group-containing compound (b) and the analysis method described in Example.

As described above, the adhesive composition is manufactured by reacting a carbodiimide group (NCN) of a polycarbodiimide with the compound (m) having a group reactive with a carbodiimide group. In such a production process, a certain amount of the carbodiimide group is consumed, and the residue of the carbodiimide group that is connected to the polyolefin group in the form of the same molecular chain contributes to the adhesiveness to polycarbonate. If the content of the carbodiimide group exceeds the above range, the free carbodiimide group is present in an excess amount with respect to the polyolefin (a) having a group reactive with a carbodiimide group, and as a result, the adhesive performance and molding processability decrease.

The adhesive composition satisfies the requirement (iii): having a density of 0.870 g/cm$^3$ to 0.940 g/cm$^3$.

The density of the adhesive composition measured according to JIS K7112 is 0.870 g/cm$^3$ to 0.940 g/cm$^3$, preferably 0.875 g/cm$^3$ to 0.940 g/cm$^3$, more preferably 0.880 g/cm$^3$ to 0.940 g/cm$^3$. When the density of the adhesive composition is within the above range, the stable productivity, molding processability, and adhesiveness of the adhesive composition are good, which is preferable.

The melt flow rate (MFR, according to ASTM D1238, 230°C, 2.16 kg load) of the adhesive composition is not particularly limited as long as the effects of the present invention are provided, and it is usually 0.01 to 500 g/10 min, preferably 0.05 to 200 g/10 min, more preferably 0.01 to 150 g/10 min.

Although a carbodiimide group changes to a urea group through water absorption, a urea group also exhibits a high reactivity with a polycarbonate. Therefore, the adhesive composition according to the present invention may include a polyolefin having a urea group to which a carbodiimide group has changed by, for example, water in the atmospheric air, and it is a preferred embodiment of the present invention.

The polyolefin (a) having a group reactive with a carbodiimide group is used in the adhesive composition and the adhesive composition may also include a polyolefin different from the polyolefin (a), such as an unmodified polyolefin, as long as the effects of the present invention are not impaired. Additionally, a modified resin can also be included that has a group reactive with a carbodiimide group but is different from the polyolefin (a) and the polyolefin having a group reactive with a carbodiimide group. Examples of such a resin include a maleic acid-modified resin and an imine-modified resin. Among these, preferred are a maleic acid-modified ethylene/butene copolymer, a maleic acid-modified ethylene/propylene copolymer, maleic acid-modified ethylene/octene copolymer, a maleic acid-modified styrene/butene/styrene copolymer, a maleic acid-modified styrene/ethylene/butene/styrene copolymer, an imine-modified styrene/butene/styrene copolymer, an imine modified styrene/ethylene/butene/styrene copolymer. These resins may be used singly or in combinations of two or more appropriately.

To the adhesive composition, known additives used in the field of polyolefins can be added, including a tackifier, a process stabilizer, a heat stabilizer, an anti-heat aging agent, and a filler. In the present invention, a tackifier is particularly preferably included for the purpose of imparting tackiness. Examples of the tackifier include a rosin derivative, a terpene resin, a petroleum resin, and a hydrogenated product thereof, and among these, a hydrogenated terpene resin and a hydrogenated petroleum resin are preferable. The tackifier is preferably included in an amount of 0 to 30% by weight relative to 100% by weight of the adhesive composition, for example, but the amount is not particularly limited thereto as long as the effects of the present invention are provided.

[Layer (C) formed of resin other than polycarbonate or resin contained in adhesive composition]

The layer (C) is formed of a resin other than the polycarbonate or the resin contained in the adhesive composition. Examples of the other resin include a polyolefin, polylactic acid, a polyketone, a polyester, a polyamide, and an ethylene/vinyl alcohol copolymer, but the other resin is not particularly limited thereto as long as the effects of the present invention are provided. These resins as the other resin may be used singly or in combinations of two or more thereof.

(Polyolefin layer)

In the present invention, a polyolefin layer is preferably used as the layer (C).

The polyolefin layer includes a polyolefin. Examples of the polyolefin include a homopolymer and a copolymer of an $\alpha$-olefin having 2 to 20 carbon atoms. These polyolefins may be used singly or in combinations of two or more thereof. Specific examples of the $\alpha$-olefin include ethylene, propylene, 1-butene, 4-methyl-1-pentene, 1-hexene, and 1-octene. In the polyolefin, an additional monomer other than the $\alpha$-olefin may be copolymerized in a small amount, for example, 10 mol% or less. Examples of the other monomer include, but not particularly limited to, a monomer having a polar group (e.g., a carbonyl group, a hydroxyl group, and an ether linking group) and a polymerizable carbon-carbon double bond in its molecule.

Specific examples of the polyolefin include homopolymers and copolymers, such as (1) ethylene homopolymer (the method for manufacturing it may be a low pressure method or a high pressure method); (2) an ethylene/propylene copolymer of 99 to 80 mol% of ethylene and 1 to 20 mol% of propylene, preferably an ethylene/propylene copolymer of 95 to 85 mol% of ethylene and 5 to 15 mol% of propylene; (3) an ethylene/1-butene copolymer of 99 to 80 mol% of ethylene and 1 to 20 mol% of 1-butene, preferably an ethylene/1-butene copolymer of 95 to 85 mol% of ethylene and 5 to 15 mol% of 1-butene; (4) an ethylene/1-octene copolymer of 99 to 80 mol% of ethylene and 1 to 20 mol% of 1-octene, preferably an ethylene/1-octene copolymer of 97 to 85 mol% of ethylene and 3 to 15 mol% of 1-octene; (5) an ethylene copolymer, such as a copolymer of ethylene and 10 mol% or less of another $\alpha$-olefin (excluding propylene, 1-butene, and 1-octene) or a vinyl monomer (e.g., vinyl acetate or ethyl acrylate); (6) a propylene homopolymer; (7) a random copolymer of propylene and 30 mol% or less of another $\alpha$-olefin, preferably a random copolymer of propylene and 20 mol% or less of another $\alpha$-olefin; (8) a block copolymer of propylene and 40 mol% or less of another $\alpha$-olefin; (9) 1-butene homopolymer; (10) a random copolymer of 1-butene and 10 mol% or less of another $\alpha$-olefin; (11) 4-methyl-1-pentene homopolymer; (12) a random copolymer of 4-methyl-1-pentene and 20 mol% or less of another $\alpha$-olefin.

Among these, preferred are homopolymers and copolymers such as (2) an ethylene/propylene copolymer of 95 to 85 mol% of ethylene and 5 to 15 mol% of propylene; (3) an ethylene/1-butene copolymer of 95 to 85 mol% of ethylene and 5 to 15 mol% of 1-butene; (4) an ethylene/1-octene copolymer of 97 to 85 mol% of ethylene and 3 to 15 mol% of 1-octene; (5) an ethylene copolymer, such as a copolymer of ethylene and 10 mol% or less of another $\alpha$-olefin (excluding propylene, 1-butene, and 1-octene) or a vinyl monomer (e.g., vinyl acetate or ethyl acrylate); (6) a propylene homopolymer; (7) a random copolymer of propylene and 20 mol% or less of another $\alpha$-olefin; and (8) a block copolymer of propylene and 40 mol% or less of another $\alpha$-olefin.

[Heat-treating step]

In the heat-treating step, the polycarbonate layer (A) and the adhesive layer (B) that have been formed through the co-extruding step are heat-treated. When the layer (C) has been formed together with the polycarbonate layer (A) and the adhesive layer (B) in the co-extruding step, the polycarbonate layer (A), the adhesive layer (B) and the layer (C) are heat-treated in the heat-treating step.

The heating temperature in the heat-treating step is preferably 60°C or more, more preferably 70°C or more, more preferably 80°C or more. Although the heat-treatment can be performed at 260°C or more, the upper limit of the heating temperature is usually 160°C.

The method for heat-treating involves, for example, bringing into contact with an object at a high temperature. Specific examples thereof include hot press, heat roll, hot water treatment, treatment in a hot air chamber, and steam heating treatment as well as infrared radiation. The sheet formed by co-extrusion may be heat-treated according to any method as long as the effects of the present invention are provided. A preferred method for the treatment involves heating the sheet in water, preferably pressurized water, at 120°C for 4 minutes or more.

The heat-treating step after the co-extruding step improves adhesiveness between the polycarbonate layer (A) and the adhesive layer (B). The reason for it is not clear, but it is probably because the heat treatment relaxes a strain generated at the interface therebetween due to the difference between the coefficient of thermal expansion of the polycarbonate and that of the adhesive layer in the formation of the laminate to thereby improve the adhesiveness.

In the method for manufacturing the laminate, at least one of the co-extruding step and the heat-treating step is preferably performed at 260°C or more. Such a temperature highly improves the adhesiveness between the polycarbonate layer (A) and an adhesive layer (B). It is more preferably that the co-extruding step be performed at 260°C or more and also that the heat-treating step be performed at 60°C or more, preferably 70 to 160°C. In this case, the heat-treating step is preferably performed by heating the sheet in water at 60°C or more for 4 minutes or more.

According to the method manufacturing a laminate, a laminate is obtained, and a co-extruded sheet including the laminate as a part thereof is obtained.

Example

Hereinafter, the present invention will be described more specifically by way of Examples and Comparative Examples, but the present invention is not limited to these Examples as long as the gist of the present invention is not exceeded.

[Measuring methods for various properties]

In Examples and the like, measurements were performed according to the following methods.

[Melt flow rate (MFR)]

Measurement was performed at 230°C under a load of 2.16 kg according to ASTM D1238.

[Density]

The density was measured according to JIS K7112.

[Number average molecular weight of carbodiimide group-containing compound]

The number average molecular weight of the carbodiimide group-containing compound was measured using GPC (gel permeation chromatography) with a tetrahydrofuran solvent (mobile phase) at a column temperature of 40°C (in terms of polystyrene, Mw: weight average molecular weight, Mn: number average molecular weight). As standard polystyrene for a molecular weight of $580 \leq Mw \leq 7 \times 10^6$, polystyrene PS-1 manufactured by Agilent Technologies, Inc. (former Polymer Laboratories Limited) was used.

[Content of carbodiimide group]

The content of the carbodiimide group was calculated from the amount of the carbodiimide group-containing compound used.

10

[Amount of maleic anhydride grafted]

The amount of maleic anhydride grafted was determined using FT-IR according to the following method.
A sample was hot-pressed at 250°C for 3 minutes to prepare a sheet, and the sheet was then analyzed according to a transmission method using an infrared spectrophotometer (FT-IR 410, manufactured by JASCO Corporation) to obtain an infrared absorption spectrum at around 1790 cm$^{-1}$. As the analysis condition, the resolution was 2 cm$^{-1}$, and the number of scans was 32.

[Rate (%) of reaction between polyolefin (a) and carbodiimide group-containing compound (b)]

The reaction rate (%) was calculated by the above-described expression (2) from the amounts of maleic anhydride grafted, which were determined by FT-IR on the adhesive composition and the polyolefin (a) (the absorbance due to maleic anhydride (1790 cm$^{-1}$) in the adhesive composition and the absorbance due to maleic anhydride in the polyolefin (a)).

[Adhesive strength of laminate]

The obtained laminates were each cut out so as to give a sample having a width of 15 mm. The adhesive strength (unit: N/15 mm) at an interface between the polycarbonate layer and the layer formed of the adhesive composition (CDI-PP1) or the adhesive strength (unit: N/15 mm) at an interface between the polycarbonate layer and the MAH-PE layer was measured on the sample using a tension tester by a T-peel method. The measurement was performed in an atmosphere at room temperature, i.e., 23°C, and in an atmosphere at a high temperature, specifically, 100°C. Further, the obtained laminates were each subjected to a retort treatment in hot water at 121°C for 30 minutes, and the adhesive strength was measured on the resulting laminates in an atmosphere at room temperature in the same manner as described above. The speed of the crosshead was 300 mm/min.

[Polyolefins used]

Polyolefins used in Examples and Comparative Examples are shown below. Commercially available products were used as the polyolefins unless otherwise noted.

（1）PP-1: polypropylene (random PP, MFR: 7 g/10 min, density: 0.910 g/cm$^3$, manufactured by Prime Polymer Co., Ltd.)
（2）PP-2: polypropylene (homo PP, MFR: 3 g/10 min, density: 0.910 g/cm$^3$, manufactured by Prime Polymer Co., Ltd.)
（3）MAH-PE: maleic anhydride-modified ethylene/α-olefin random copolymer (MFR: 9.0 g/10 min, density: 0.900 g/cm$^3$, amount of maleic anhydride grafted: 0.2%, manufactured by Mitsui Chemicals, Inc.)

[Example 1 and Comparative Example 1]

<Manufacture of polyolefin (a) having group reactive with carbodiimide group>

With 100 parts by weight of PP-1, 1 part by weight of maleic anhydride (manufactured by Wako Pure Chemical Industries, Ltd.; hereinafter, abbreviated as MAH) and 0.25 parts by weight of 2,5-dimethyl-2,5-bis(tert-butylperoxy)hexyne-3 (trade name PERHEXYN (R) 25B, manufactured by NOF CORPORATION) were mixed, and the resultant mixture was extruded using the twin-screw kneader (TEX-30 manufactured by THE JAPAN STEEL WORKS, LTD., L/D: 40, using vacuum vent) at a cylinder temperature of 220°C, a screw speed of 200 rpm, and a discharge amount of 80 g/min to obtain maleic acid-modified polypropylene (hereinafter, abbreviated as MAH-PP-1). MAH-PP-1 had a density of 0.915 g/cm$^3$.
MAH-PP-1 obtained was dissolved in xylene, and the resulting xylene solution was then poured into acetone to reprecipitate MAH-PP-1 for purification. The amount of maleic anhydride grafted was found to be 0.7% by weight as determined by FT-IR.

<Manufacture of Adhesive Composition>

90 parts by weight of PP-1, 10 parts by weight of MAH-PP-1 manufactured above, and 1.7 parts by weight of the carbodiimide group-containing compound (trade name CARBODILITE (R) HMV-8CA, manufactured by Nisshinbo Chemical Inc., carbodiimide group equivalent: 278, number average molecular weight: 2100, the number of carbodiimide groups in one molecule: 9) were mixed, and the resultant mixture was extruded using the twin-screw kneader (TEX-30 manufactured by THE JAPAN STEEL WORKS, LTD., L/D= 40, using vacuum vent) at a cylinder temperature of 250°C, a screw speed of 200 rpm, and a discharge amount of 80 g/min to manufacture an adhesive composition (hereinafter, abbreviated as CDI-PP1).

CDI-PP1 obtained had an MFR (230°C, load of 2.16 kg) of 3 g/10 min, and a density of 0.910 g/cm$^3$. It was found from the FT-IR analysis on CDI-PP1 that a peak (1790 cm$^{-1}$) assigned to maleic anhydride disappeared, so that the ratio of the difference (X) between the absorbance due to the group reactive with the carbodiimide group in MAH-PP-1 and the absorbance due to the group reactive with the carbodiimide group in CDI-PP1 to the absorbance (Y) due to the group reactive with the carbodiimide group in MAH-PP-1 was 1. Therefore the rate of the reaction between MAH-PP-1 and the carbodiimide group-containing compound was 100%. The content of the carbodiimide group was 6.6 mmol per 100 g of CDI-PP1 (calculated from the amount used).

<Manufacture of Laminates>

Laminates of PP-2/CDI-PP1/polycarbonate/CDI-PP1/PP-2 as Example 1 and PP-2/MAH-PE/polycarbonate/MAH-PE/PP-2 as Comparative Example 1 were prepared by co-extrusion using a molding machine for molding a five-layered T-die cast sheet consisting of four types of layers (manufactured by EDI). As the polycarbonate, LEXAN: 141R (product name) manufactured by SABIC was used. The extruder for the PP-2 layer had 50 mmφ, and the temperature thereof was set at 230°C. The extruder for the CDI-PP1 or MAH-PE layer had 40 mmφ, and the temperature thereof was set at 280°C. The extruder for the polycarbonate layer had 30 mmφ, and the temperature thereof was set at 280°C. The temperature at the die was set at 280°C, and the laminate was drawn out at 1 m/min. The thicknesses of the layers were set at 350/100/150/100/350 (μm) for both PP-2/CDI-PP1/polycarbonate/CDI-PP1/PP-2 in Example 1 and PP-2/MAH-PE/polycarbonate/MAH-PE/PP-2 in Comparative Example 1.

<Evaluation of Adhesive Strength of Laminates>

The adhesive strength of each laminate manufactured above was evaluated. The results are shown in Table 1.

[Table 1]

Table 1

| Adhesive Strength of Laminate (N/15 mm) | | Example 1 | Comparative Example 1 |
|---|---|---|---|
| | In Atmosphere at Room Temperature | 26 | 1 |
| | In Atmosphere at High Temperature | 12 | <1 |
| | After Retort Treatment | 66 | <1 |

**Claims**

1. A method for manufacturing a laminate, comprising the step of co-extruding a polycarbonate and an adhesive composition to thereby form a polycarbonate layer (A) and an adhesive layer (B) at least a part of which is laminated to the layer (A); and the step of heat-treating the polycarbonate layer (A) and the adhesive layer (B), wherein the adhesive composition satisfies the following requirements (i) to (iii):

   (i) comprising a polyolefin formed through a reaction between a polyolefin (a) having a group reactive with a carbodiimide group and a carbodiimide group-containing compound (b);
   (ii) comprising carbodiimide groups in an amount of 0.1 to 50 mmol per 100 g of adhesive composition; and
   (iii) having a density of 0.870 g/cm$^3$ to 0.940 g/cm$^3$.

2. The method for manufacturing a laminate according to claim 1, wherein the co-extruding step is a step of co-extruding the polycarbonate and the adhesive composition with a resin other than the polycarbonate or a resin contained in the adhesive composition to thereby form the polycarbonate layer (A), the adhesive layer (B), and a layer (C) formed of the resin other than the polycarbonate or the resin contained in the adhesive composition, wherein the layer (C) is laminated to the adhesive layer (B); and
the heat-treating step is a step of heat-treating the polycarbonate layer (A), the adhesive layer (B), and the layer (C).

3. The method for manufacturing a laminate according to claim 2, wherein the resin other than the polycarbonate or the resin contained in the adhesive composition comprises a polyolefin.

4. The method for manufacturing a laminate according to any one of claims 1 to 3, wherein the polycarbonate is a polycarbonate or a copolycarbonate obtained by reacting a dihydroxy compound and phosgene or diphenyl carbonate.

5. The method for manufacturing a laminate according to claim 4, wherein the dihydroxy compound is 4,4'-dihydroxy-diphenyl-2,2-propane (bisphenol A).

6. The method for manufacturing a laminate according to any one of claims 1 to 5, wherein the laminate is for use in a packaging container for foods.

7. The method for manufacturing a laminate according to any one of claims 1 to 6, wherein at least one of the co-extruding step and the heat-treating step is performed at 260°C or more.

8. The method for manufacturing a laminate according to any one of claims 1 to 7, wherein the co-extruding step is performed at 260°C or more, and the heat-treating step is performed at 60°C or more.

9. The method for manufacturing a laminate according to claim 8, wherein the heat-treating step is performed by heating for 4 minutes or more in water at 60°C or more.

10. A co-extruded sheet comprising a laminate as a part thereof, the laminate comprising a polycarbonate layer (A) formed of a polycarbonate and an adhesive layer (B) at least a part of which is laminated to the layer (A), wherein the adhesive layer (B) is formed of an adhesive composition satisfying the following requirements (i) to (iii):

　　(i) comprising a polyolefin formed through a reaction between a polyolefin (a) having a group reactive with a carbodiimide group and a carbodiimide group-containing compound (b);
　　(ii) comprising carbodiimide groups in an amount of 0.1 to 50 mmol per 100 g of adhesive composition; and
　　(iii) having a density of 0.870 g/cm$^3$ to 0.940 g/cm$^3$.

## INTERNATIONAL SEARCH REPORT

| International application No. |
|---|
| PCT/JP2018/006050 |

### A. CLASSIFICATION OF SUBJECT MATTER
Int.Cl. B29C47/06(2006.01)i, B29C47/88(2006.01)i, B32B27/36(2006.01)i, B65D65/40(2006.01)i, B29K69/00(2006.01)n, B29L9/00(2006.01)n

According to International Patent Classification (IPC) or to both national classification and IPC

### B. FIELDS SEARCHED
Minimum documentation searched (classification system followed by classification symbols)
Int.Cl. B29C47/00-B29C47/96, B32B27/36, B65D65/40, B29K69/00, B29L9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P, X | WO 2017/104731 A1 (MITSUI CHEMICALS, INC.) 22 June 2017, paragraphs [0008]-[0171] (Family: none) | 1-10 |
| X | WO 2007/040261 A1 (MITSUI CHEMICALS, INC.) 12 April 2007, paragraphs [0006]-[0086] | 10 |
| Y | & US 2009/0110945 A1, paragraphs [0009]-[0093] & EP 1942168 A1 & CN 101278026 A & KR 10-2008-0055982 A | 1-9 |
| Y | JP 2003-292694 A (TOSOH CORPORATION) 15 October 2003, paragraphs [0015]-[0077] (Family: none) | 1-9 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.04.2018 | 17.04.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/006050

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2006/098290 A1 (MITSUI CHEMICALS, INC.) 21 September 2006, paragraphs [0005]-[0075] <br> & US 2008/0152904 A1, paragraphs [0009]-[0130] & EP 1860169 A1 & CN 101142291 A & KR 10-2007-0114213 A | 1-10 |

Form PCT/ISA/210 (continuation of second sheet) (January 2015)

**EP 3 587 068 A1**

**Patent documents cited in the description**

- JP 4699449 B
- JP 3930515 B
- WO 2007507374 A
- JP 7103278 A